(19) **Europäisches Patentamt European Patent Office Office européen des brevets**

(11) **EP 4 621 666 A1**

(12) **EUROPEAN PATENT APPLICATION**
published in accordance with Art. 153(4) EPC

(43) Date of publication:
24.09.2025 Bulletin 2025/39

(51) International Patent Classification (IPC):
$G06N\ 20/00^{(2019.01)}$        $G06F\ 16/906^{(2019.01)}$

(21) Application number: 22965800.0

(22) Date of filing: 16.11.2022

(52) Cooperative Patent Classification (CPC):
G06F 16/906; G06N 20/00

(86) International application number:
PCT/JP2022/042614

(87) International publication number:
WO 2024/105824 (23.05.2024 Gazette 2024/21)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: FUJITSU LIMITED
Kawasaki-shi, Kanagawa 211-8588 (JP)

(72) Inventors:
• NARITA, Kenichiroh
Kawasaki-shi, Kanagawa 211-8588 (JP)
• PIAO, Bin
Kawasaki-shi, Kanagawa 211-8588 (JP)
• FUKUDA, Takasaburo
Kawasaki-shi, Kanagawa 211-8588 (JP)

(74) Representative: Hoffmann Eitle
Patent- und Rechtsanwälte PartmbB
Arabellastraße 30
81925 München (DE)

(54) **BIAS EVALUATION PROGRAM, DEVICE, AND METHOD**

(57) A bias evaluation device classifies plural items of data into plural groups based on a first attribute of plural attributes included in each item of the plural items of data, identifies, from among the plural groups, a second group having a lower positive example ratio of data included than a positive example ratio of data included in a first group x of the plural groups, and executes bias evaluation for data based on comparison of the first group with another group y not including the second group among the plural groups.

FIG.4

FAVORABLE TREATMENT

$DI_{new1}(x)=0.625$

ENGINEERING × MALE — $P(x)=0.5$

MEDICINE × MALE — $P(\bar{x}1)=0.2$

ENGINEERING × FEMALE — $P(\bar{x}2)=0.2$

LAW × FEMALE — $P(\bar{x}3)=0.2$

MEDICINE × FEMALE — $P(\bar{x}4)=0.2$

LAW × MALE — $P(\bar{x}5)=0.8$ — $\bar{x}5=y1$

$\bar{x}$

EP 4 621 666 A1

## Description

FIELD

The disclosed technology relates to a bias evaluation program, a bias evaluation device, and a bias evaluation method.

BACKGROUND

A system using a machine learning model has been used from the past for pass/fail determination of loan screening, recruiting, examinations, and the like. If training data for training the machine learning model is biased against certain attributes, such as race, gender, etc., the results of the determination by the trained machine learning model may be discriminatory. When such a discriminatory determination result is output at the time of operating the system using the machine learning model, huge social loss may occur. Therefore, at the time of system construction, it is necessary to eliminate unfair bias from the training data for training the machine learning model and ensure fairness of the system.
For example, it is known that data is divided into groups based on the attribute values of specific attributes, and a ratio of a positive example ratio of data in a group to be evaluated to a positive example ratio of data in all the groups other than the group to be evaluated is used as an index indicating fairness of data.

Prior Art Document

Patent Literature

Patent Literature 1: Japanese National-Phase Publication (JP-A) No. 2022-510142
Patent Literature 2: Japanese Patent Application Laid-Open (JP-A) No. 2021-152838

SUMMARY OF INVENTION

Technical Problem

However, even when it can be evaluated that there is no bias in the data by comparing the group to be evaluated with all the other groups, there may be bias when focusing on a specific group included in all the other groups.
As one aspect, an object of the disclosed technology is to detect a bias that cannot be detected by comparison between a group to be evaluated and all the other groups.

Solution to Problem

As an aspect, the disclosed technology is for classifying a plurality of items of data into a plurality of groups based on a first attribute of a plurality of attributes included in each of the plurality of items of data. In addition, the disclosed technology is to identify, from among the plurality of groups, a second group having a lower positive example ratio of data included than a positive example ratio of data included in a first group of the plurality of groups. In addition, the disclosed technology is to execute bias evaluation for data based on comparison of the first group with another group not including the second group among the plurality of groups.

Advantageous Effects of Invention

As one aspect, the effect of being able to detect a bias that cannot be detected by comparison between a group to be evaluated and all the other groups is exhibited.

BRIEF DESCRIPTION OF DRAWINGS

Fig. 1 is a diagram for explaining a bias of data that cannot be detected by comparison between a group to be evaluated and all the other groups.
Fig. 2 is a diagram for explaining a bias of data that cannot be detected by comparison between the group to be evaluated and all the other groups.

Fig. 3 is a functional block diagram of a bias evaluation device according to the present embodiment.

Fig. 4 is a diagram for explaining calculation of a DI score in a first embodiment.

Fig. 5 is a block diagram illustrating a schematic configuration of a computer functioning as a bias evaluation device.

Fig. 6 is a flowchart illustrating an example of bias evaluation processing.

Fig. 7 is a flowchart illustrating the example of the bias evaluation processing.

Fig. 8 is a diagram for explaining calculation of a DI score in a second embodiment.

Fig. 9 is a diagram for explaining calculation of a DI score in a third embodiment.

DESCRIPTION OF EMBODIMENTS

Hereinafter, an example of an embodiment according to the disclosed technology will be described with reference to the drawings.

Before describing details of the embodiment, for groups obtained by dividing data based on the attribute values of specific attributes, a bias of data that cannot be detected by comparison between a group to be evaluated and all the other groups will be described. Here, a machine learning model for determining pass/fail of each examinee based on data of examinees including a plurality of attributes will be described as an example. The data of the examinees includes attributes such as gender, department of application, and pass/fail. The attribute of pass/fail is an attribute corresponding to a label output from the machine learning model.

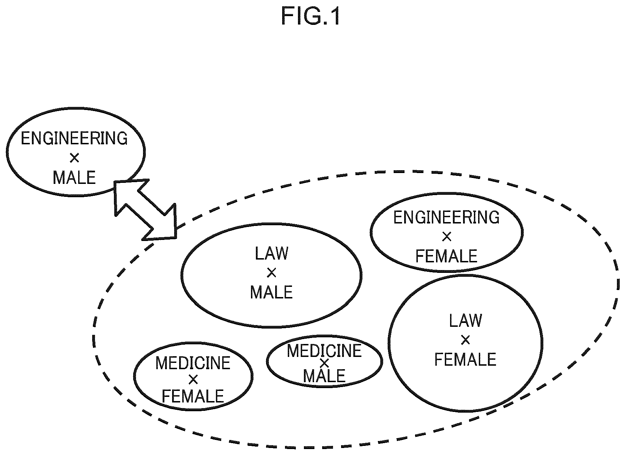

For example, as illustrated in Fig. 1, an information processing device of the past that evaluates a bias of data divides data into groups based on the attribute value of each of attributes for a combination of the attribute "department of application" and the attribute "gender". Here, a group having the attribute value of the attribute "department of application" which is "department of engineering" and the attribute value of the attribute "gender" which is "male" (which will hereinafter be denoted by "engineering department × male"; the same applies to other groups) will be referred to as a group to be evaluated. In this case, the information processing device compares the group to be evaluated with all the other groups (in the example of Fig. 1, the groups of "department of medicine × male", "department of engineering × female", "department of law × female", "department of medicine × female", and "department of law × male"), and calculates an index of fairness. As the index of fairness, for example, a desperate impact (DI) score represented by the following Formula (1) is used.

[Math. 1]

$$DI(x) = \frac{P(x)}{P(\bar{x})} \qquad (1)$$

$$P(x) = \frac{no(x)}{num(x)} \qquad (2)$$

x is a group to be evaluated, DI(x) is a DI score for the group x, and P(x) is a positive example ratio for the group x represented by Formula (2). num(x) in Formula (2) is the number of items of data classified into the group x, and no(x) is the number of positive examples among the items of the data classified into the group x. A positive example is, for example, data in which the attribute corresponding to the binary classification target variable has either one value, whereas the negative example is, for example, data in which the attribute has the other value. $\bar{x}$ (in the mathematical formulas and the drawings to be described below, "¯(overbar)" added above "x") represents all the groups other than the group x. DI(x) getting closer to 1 represents data being fairer. In addition, as DI(x) becomes increasingly smaller than 1, the other groups are treated more favorably as compared with the group x, and as DI(x) becomes increasingly larger than 1, the other groups are treated more poorly as compared with the group x.

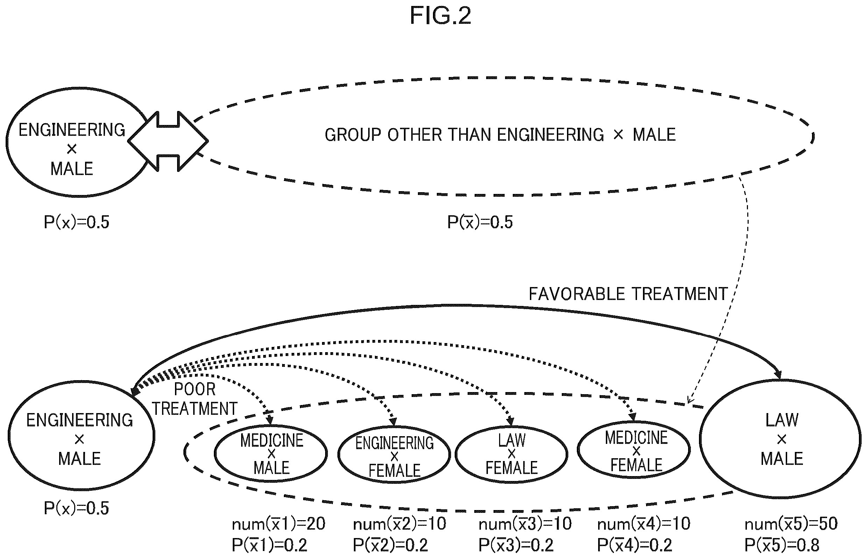

As illustrated in the upper diagram of Fig. 2, when the group to be evaluated is compared with all the other groups, there is a case where a bias of data is not detected. For example, in a case in which the positive example ratio (ratio of pass) P(x) of "department of engineering × male" is 0.5 and the positive example ratio P(x¯) of all the other groups is 0.5, there is no difference in the positive example ratios, and thus it seems that there is no unfairness in the data.

However, as illustrated in the lower diagram of Fig. 2, when the other groups are individually viewed, there could be unfairness. Specifically, "department of medicine × male", "department of engineering × female", "department of law × female", and "department of medicine × female" are treated poorly compared to the group to be evaluated "department of engineering × male". "Department of law × male" is more favorably treated than the group to be evaluated "department of engineering × male", and there is unfairness on "department of engineering × male". As described above, unfairness on the group to be evaluated may be hidden by the numbers of items of data and the proportions of positive examples of each group other than the group to be evaluated. In the example of Fig. 2, although there is unfairness on "department of engineering × male", as compared with the non-negligible group of "department of law × male" having the largest number of examinees among the total number of examinees, the unfairness is mixed with unfairness of other groups and is not reflected in the DI score.

In order to solve the above problem, it is conceivable to individually evaluate the other groups and select a group as a calculation target of the DI score. Regarding the selection of a group, selection based on the data size of a group used as a reference, selection based on the ethical importance used as a reference, selection based on the degree of favorable treatment compared with that of the group to be evaluated used as a reference, and the like are conceivable. Selection based on the ethical importance used as a reference is, for example, a case where the ethical importance is used as a criterion such as inappropriate for comparison because the department of law is a different field from the department of engineering.

In selection based on the data size used as a reference, a group may not be deleted from the viewpoint of fairness even if the group has a small number of items of data. In addition, in selection based on the ethical importance used as a reference, since manual determination is required for each of the other groups, the work cost increases, and it is also difficult to define a reference for determining whether the selection is ethically important. Therefore, in the present embodiment, selection of a group to be included in other groups to be compared with the group to be evaluated is determined based on the degree of favorable treatment. Hereinafter, a bias evaluation device according to the present embodiment will be described in detail.

<First Embodiment>

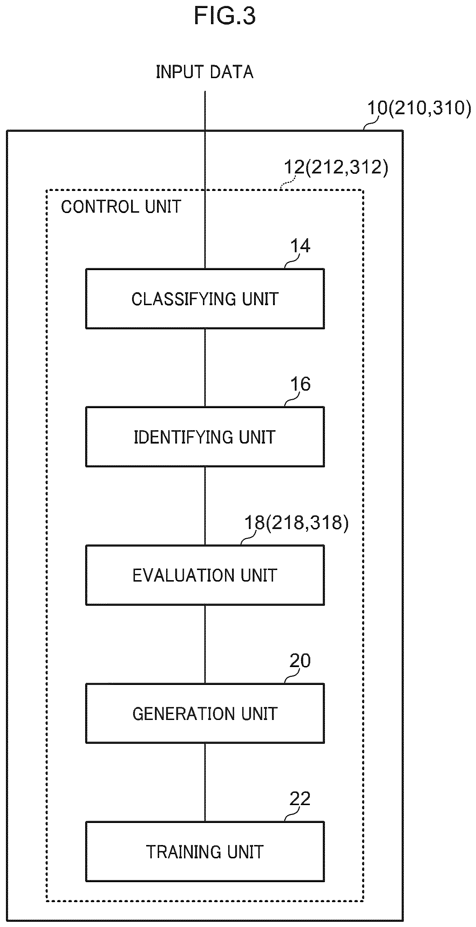

As illustrated in Fig. 3, a bias evaluation device 10 according to a first embodiment functionally includes a control unit 12. The control unit 12 further includes a classifying unit 14, an identifying unit 16, an evaluation unit 18, a generation unit 20, and a training unit 22.

The classifying unit 14 acquires input data input to the bias evaluation device 10. The input data is a plurality of items of data having a plurality of attributes. The classifying unit 14 classifies the input data into a plurality of groups based on a first attribute of the plurality of attributes included in each of the plurality of items of data. The first attribute is an attribute for which an output of the machine learning model can be discriminatory due to a bias, for example, gender, nationality, race, or the like. In addition, the classifying unit 14 may classify the input data into a plurality of groups based on a combination of the first attribute and a second attribute. The examples of Figs. 1 and 2 described above are examples in which the first attribute "gender" and the second attribute "department of application" are combined.

The identifying unit 16 identifies, from among a plurality of groups classified by the classifying unit 14, a second group having a lower positive example ratio of data included than the positive example ratio of data included in a first group of the plurality of groups. The first group is the group to be evaluated, and is "department of engineering × male" in the examples of Figs. 1 and 2.

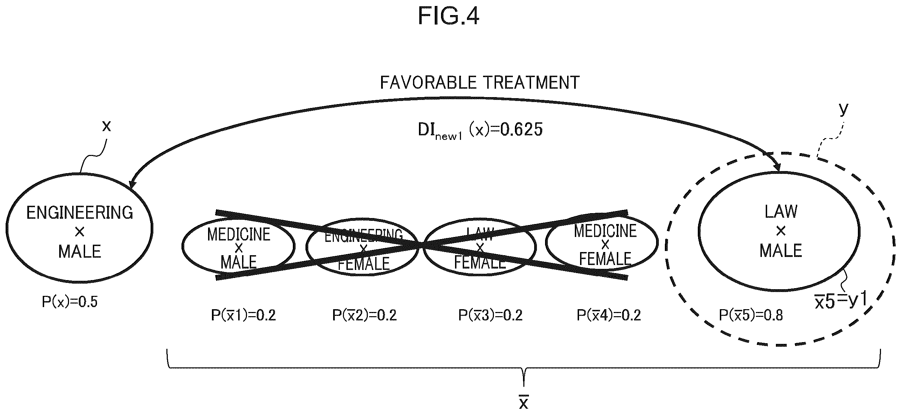

Specifically, as illustrated in Fig. 4, the identifying unit 16 sets a group to be evaluated as x and each group (hereinafter, referred to as a "subgroup") included in x⁻ excluding the group to be evaluated among the plurality of groups as $x^-_i$ (i = 1, 2,... and n; n is the number of groups included in x⁻). Then, the identifying unit 16 calculates the positive example ratio $P(x)$ of the group x and the positive example ratio $P(x^-_i)$ of the subgroup $x^-_i$, and excludes the subgroup $x^-_i$ in which $P(x^-_i)$ is smaller than $P(x)$ from x⁻. The identifying unit 16 sets all the subgroups that have not been excluded as a comparison group y, and sets the subgroup included in the comparison group y as yj (j = 1, 2,..., and m; m is the number of subgroups included in the comparison group y). That is, a subgroup yj satisfies the constraint expressed by the following Formula (3).
[Math. 2]

$$\forall yj \in val(Attr), \\ P(yj) \geq P(x), \\ yj \neq x \quad \Bigg\} \quad (3)$$

The first line of Formula (3) is a constraint that the subgroup yj belongs to any group corresponding to all patterns of combinations of attribute values. The second line is a constraint that the positive example ratio of the subgroup yj is equal to or higher than the positive example ratio of the group x to be evaluated. The third line is a constraint that the subgroup yj is a group other than the group x to be evaluated. Therefore, the comparison group y includes the subgroup yj that is more favorably treated than the group x to be evaluated, and the subgroup $x^-_i$ that is more poorly treated than the group x to be evaluated is excluded from the comparison target for evaluation.

The evaluation unit 18 executes bias evaluation for data based on comparison of the first group with another group not including the second group among the plurality of groups. Specifically, the evaluation unit 18 calculates the DI score using the positive example ratio P(x) of the group x to be evaluated and the positive example ratio P(y) of the comparison group y. For example, the evaluation unit 18 calculates $DI_{new1}(x)$ expressed by the following Formula (4).

[Math. 3]

$$DI_{new1}(x) = \frac{P(x)}{P(y)} \qquad (4)$$

$$P(y) = \frac{\sum_{j=1}^{m} no(yj)}{\sum_{j=1}^{m} num(yj)} \qquad (5)$$

P(y) is a positive example ratio of the comparison group y indicated by a ratio of the sum of the number of positive examples among the data classified into a subgroup yi to the sum of the number of items of data classified into the subgroup yi, as shown in Formula (5). In the example of Fig. 4, the evaluation unit 18 calculates $DI_{new1}(x) = 0.5/0.8 = 0.625$.

The generation unit 20 performs processing on the input data based on the bias evaluation result by the evaluation unit 18, and generates training data for machine learning. Specifically, the generation unit 20 specifies the group x with a DI score being equal to or less than a predetermined reference value. Then, for the specified group x, processing such as changing of an attribute value is performed on at least one of the data of the group x and the data of the comparison group y such that a difference between the positive example ratio of the group x and the positive example ratio of the comparison group y falls within a predetermined range.

The training unit 22 trains the machine learning model using the training data generated by the generation unit 20. For example, in the case of a machine learning model for determining pass or fail of each of the examinees, the training unit 22 trains the machine learning model using the attribute of pass or fail included in the data of the examinees as an objective variable and other attributes as explanatory variables. The machine learning model may be, for example, a neural network.

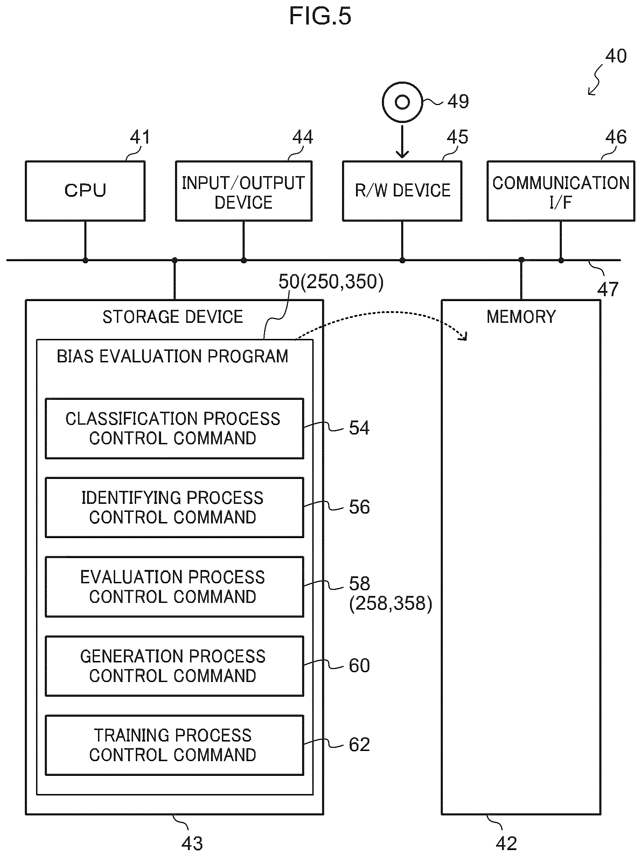

The bias evaluation device 10 may be realized by, for example, a computer 40 illustrated in Fig. 5. The computer 40 includes a central processing unit (CPU) 41, a memory 42 as a transient storage area, and a nonvolatile storage device 43. In addition, the computer 40 includes an input/output device 44 such as an input device and a display device, and a read/write (R/W) device 45 that controls reading and writing of data in and from a storage medium 49. In addition, the computer 40 includes a communication interface (I/F) 46 connected to a network such as the Internet. The CPU 41, the memory 42, the storage device 43, the input/output device 44, the R/W device 45, and the communication I/F 46 are connected to each other via a bus 47.

The storage device 43 is, for example, a hard disk drive (HDD), a solid state drive (SSD), a flash memory, or the like. The storage device 43 as a storage medium stores a bias evaluation program 50 for causing the computer 40 to function as the bias evaluation device 10. The bias evaluation program 50 has a classification process control command 54, an identifying process control command 56, an evaluation process control command 58, a generation process control command 60, and a training process control command 62.

The CPU 41 reads the bias evaluation program 50 from the storage device 43, loads the program in the memory 42, and sequentially executes the control commands included in the bias evaluation program 50. The CPU 41 executes the classification process control command 54 to operate as the classifying unit 14 illustrated in Fig. 3. In addition, the CPU 41 executes the identifying process control command 56 to operate as the identifying unit 16 illustrated in Fig. 3. In addition, the CPU 41 executes the evaluation process control command 58 to operate as the evaluation unit 18 illustrated in Fig. 3. In addition, the CPU 41 executes the generation process control command 60 to operate as the generation unit 20 illustrated in Fig. 3. In addition, the CPU 41 executes the training process control command 62 to operate as the training unit 22 illustrated in Fig. 3. As a result, the computer 40 executing the bias evaluation program 50 functions as the bias evaluation device 10. The CPU 41 executing the program is hardware.

The functions implemented by the bias evaluation program 50 may be implemented by, for example, a semiconductor integrated circuit, more specifically, an application specific integrated circuit (ASIC), a field-programmable gate array (FPGA), or the like.

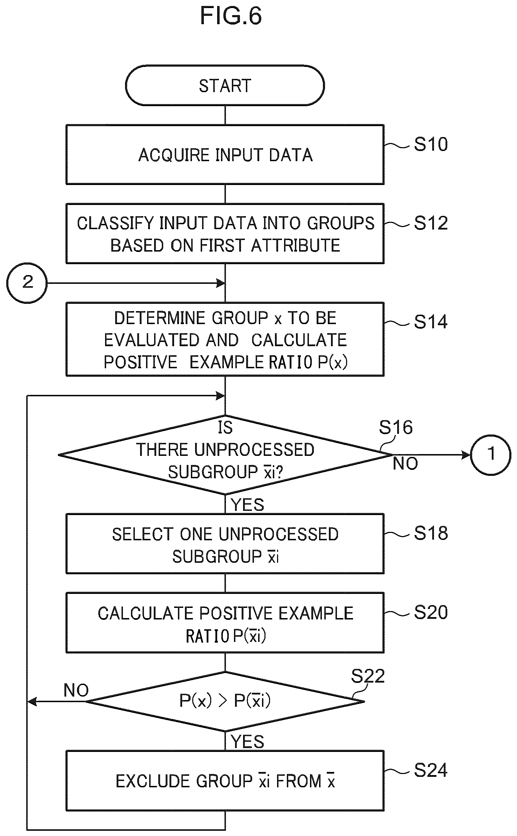

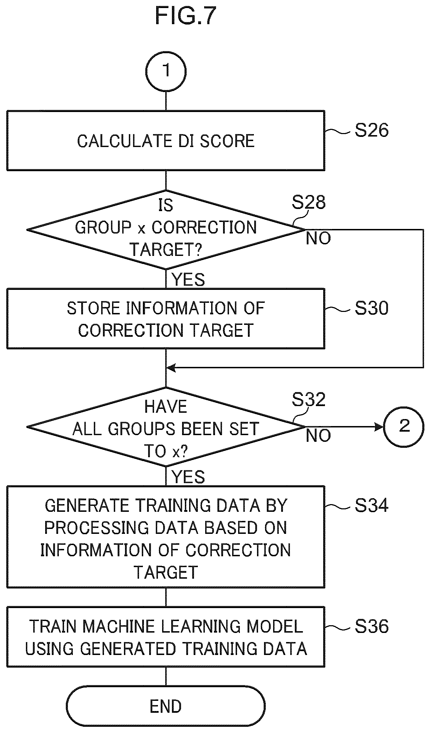

Next, an operation of the bias evaluation device 10 according to the first embodiment will be described. When input data is input to the bias evaluation device 10 and generation of training data in which biases have been corrected is instructed, bias evaluation processing illustrated in Figs. 6 and 7 is executed in the bias evaluation device 10. The bias evaluation processing is an example of a bias evaluation method of the disclosed technology.

The classifying unit 14 acquires the input data input to the bias evaluation device 10 in step S10. Next, the classifying unit 14 classifies the input data into a plurality of groups based on the first attribute or a combination of the first attribute and the second attribute in step S12.

Next, in step S14, the classifying unit 14 determines a group x to be evaluated. The classifying unit 14 may sequentially determine the plurality of groups classified in step S12 as the group x one by one, or may determine a group designated by the user as the group x. Then, the identifying unit 16 calculates the positive example ratio P(x) of the group x.

Next, in step S16, the identifying unit 16 determines whether there is a group for which subsequent processing has been unprocessed in a subgroup x⁻i other than the group x to be evaluated. If there is an unprocessed subgroup x⁻i, the process proceeds to step S18, and if there is no unprocessed subgroup x⁻i, the process proceeds to step S26.

In step S18, the identifying unit 16 selects one unprocessed subgroup x⁻i. Next, in step S20, the identifying unit 16 calculates the positive example ratio P(x⁻i) of the selected subgroup x⁻i. Next, in step S22, the identifying unit 16 determines whether P(x⁻i) is smaller than P(x). In the case of P(x) > P(x⁻i), the processing proceeds to step S24, and the classifying unit 14 excludes the subgroup x⁻i from x⁻ and returns to step S16. In the case of P(x) ≤ P(x⁻i), the processing directly returns to step S16.

In step S26, the identifying unit 16 sets all the subgroups not excluded in step S24 as a comparison group y. Specifically, the evaluation unit 18 calculates the DI score represented by Formula (4), for example, by using the positive example ratio P(x) of the group x to be evaluated and the positive example ratio P(y) of the comparison group y.

Next, in step S28, the generation unit 20 determines whether the group x is a correction target. Specifically, in the case in which the DI score of the group x is equal to or less than a predetermined reference value, the generation unit 20 determines the group x as a correction target. In the case in which the group x is a correction target, the processing proceeds to step S30. In step S30, the generation unit 20 temporarily stores the information on the group as a correction target, specifically, the information such as the data belonging to the group x, the DI score, the positive example ratio P(x), and the positive example ratio P(y) of the comparison group y in a predetermined storage area, and the processing proceeds to step S32. When the group x is not a correction target, step S30 is skipped, and the processing proceeds to step S32.

In step S32, the generation unit 20 determines whether all the groups to be evaluated for fairness among the plurality of groups classified in step S12 described above have been set as the group x to be evaluated. In the case in which there is an unset group, the processing returns to step S14, and in the case in which all the groups have been set, the processing proceeds to step S34.

In step S34, the generation unit 20 performs processing on the input data so as to correct the bias of the data based on the information stored in step S30 described above, and generates training data for machine learning. Next, in step S36, the generation unit 20 trains the machine learning model using the generated training data, and the bias evaluation processing ends.

As described above, the bias evaluation device according to the first embodiment classifies the plurality of items of data into the plurality of groups based on the first attributes of the plurality of attributes included in each of the plurality of items of data. In addition, the bias evaluation device identifies, from among a plurality of groups, a second group having a lower positive example ratio of included data than the positive example ratio of data included in a first group of the plurality of groups. In addition, the bias evaluation device executes bias evaluation for data based on comparison of the first group with another group not including the second group among the plurality of groups. Thus, a bias that cannot be detected by comparison of the group to be evaluated with all the other groups can be detected.

In addition, the bias evaluation device according to the first embodiment generates training data for machine learning by performing processing on a plurality of items of data such that a difference in positive example ratio between the first group and another group falls within a predetermined range based on an execution result of bias evaluation of the data. As a result, it is possible to generate the training data with the corrected bias that cannot be detected by comparison of the group to be evaluated with all the other groups.

<Second Embodiment>

Next, a second embodiment will be described. In a bias evaluation device according to the second embodiment, the same configurations as those of the bias evaluation device 10 according to the first embodiment are denoted by the same reference numerals, and detailed description thereof will be omitted.

As illustrated in Fig. 3, a bias evaluation device 210 according to the second embodiment functionally includes a control unit 212. The control unit 212 further includes a classifying unit 14, an identifying unit 16, an evaluation unit 218, a generation unit 20, and a training unit 22.

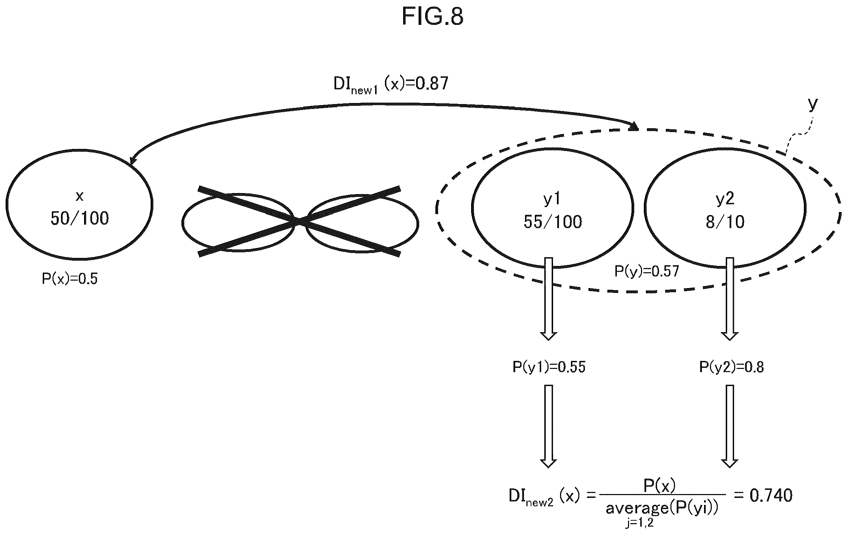

Although the case in which all the subgroup yj that is more favorably treated than the group x to be evaluated is set as a comparison group has been described in the first embodiment, when there are a plurality of subgroups yj, a bias may be overlooked depending on the size of data of the subgroups. Specifically, as illustrated in Fig. 8, in the case in which the positive example ratio P(x) of the group x to be evaluated is 0.5 and the positive example ratio P(y) of the comparison group y is 0.57, the DI score ($DI_{new1}(x)$) of the first embodiment is 0.87. Here, it is assumed that the comparison group y includes subgroups y1 and y2, and the positive example ratios thereof are different, such as P(y1) = 0.55 and P(y2) = 0.8. However, when the scale (the number of data items) of the subgroup y1 is larger than that of the subgroup y2, the positive example ratio of all the comparison group y is strongly affected by the subgroup y1. As a result, in the example of Fig. 8, the bias of the subgroup y2 getting a higher degree of favorable treatment than the group x to be evaluated is overlooked.

Therefore, the evaluation unit 218 according to the second embodiment calculates the DI score by using the average of the positive example ratios of the group of the subgroups yj included in the comparison group y, thereby preventing overlooking of the bias when compared with a subgroup having a smaller scale. For example, the evaluation unit 218 calculates $DI_{new2}(x)$ expressed by the following Formula (6). In the example of Fig. 8, the evaluation unit 218 calculates $DI_{new2}(x) = 0.5/((0.55 + 0.8)/2) = 0.740$.

[Math. 4]

$$DI_{new2}(x) = \frac{P(x)}{\underset{j=1,2,\dots,m}{\text{average}} P(yj)} \qquad (6)$$

The bias evaluation device 210 may be realized by, for example, the computer 40 illustrated in Fig. 5. The storage device 43 of the computer 40 stores a bias evaluation program 250 for causing the computer 40 to function as the bias evaluation device 210. The bias evaluation program 250 has a classification process control command 54, an identifying process control command 56, an evaluation process control command 258, a generation process control command 60, and a training process control command 62.

The CPU 41 reads the bias evaluation program 250 from the storage device 43, loads the program in the memory 42, and sequentially executes the control commands included in the bias evaluation program 250. The CPU 41 executes the evaluation process control command 258 to operate as the evaluation unit 218 illustrated in Fig. 3. The same applies to the other control commands with respect to the bias evaluation program 50 according to the first embodiment. As a result, the computer 40 executing the bias evaluation program 250 functions as the bias evaluation device 210.

The functions implemented by the bias evaluation program 250 may be implemented by, for example, a semiconductor integrated circuit, more specifically, an ASIC, an FPGA, or the like.

Since the operation of the bias evaluation device 210 according to the second embodiment is different from that of the first embodiment only in the DI score calculated in step S26 of the bias evaluation processing (Figs. 6 and 7), the description thereof will be omitted.

As described above, when a plurality of subgroups are included in another group, the bias evaluation device according to the second embodiment calculates the DI score by using the average of the positive example ratios of the data included in each of the plurality of subgroups as the positive example ratio of the data included in the other groups. Thus, this makes it possible to prevent a bias of a subgroup having a small scale in the comparison group from being overlooked.

<Third Embodiment>

Next, a third embodiment will be described. In a bias evaluation device according to the third embodiment, the same configurations as those of the bias evaluation device 10 according to the first embodiment are denoted by the same reference numerals, and detailed description thereof will be omitted.

As illustrated in Fig. 3, the bias evaluation device 310 according to the third embodiment functionally includes a control unit 312. The control unit 312 further includes a classifying unit 14, an identifying unit 16, an evaluation unit 318, a generation unit 20, and a training unit 22.

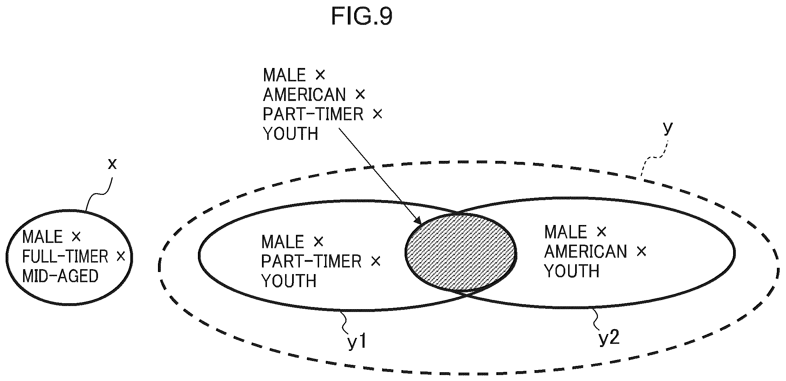

When a comparison group y includes a plurality of subgroups yj, independence of the subgroups is not guaranteed. Therefore, depending on a subgroup yj, instances may overlap. For example, as illustrated in Fig. 9, in a subgroup y1 "male × part-timer × youth" and a subgroup y2 "male × American × youth" overlap the instance of "male × American × part-timer × youth".

Thus, the evaluation unit 318 according to the third embodiment excludes the overlapping portion of the instance and calculates the DI score to prevent the overlapping count. For example, the evaluation unit 318 calculates $DI_{new3}(x)$ by using the positive example ratio P(y) of the comparison group y shown in the following Formula (7). The calculation formula of $DI_{new3}(x)$ is the same as the calculation formula of $DI_{new1}(x)$ shown in Formula (4) of the first embodiment.

[Math. 5]

$$P(y) = \frac{\sum_{j=1}^{m} no\,(yj) - \bigcap_{v \neq j}^{m} no(yv) \bigcap no(yj)}{\sum_{j=1}^{m} num(yj) - \bigcap_{v \neq j}^{m} num(yv) \bigcap num(yj)} \qquad (7)$$

Note that yv represents a subgroup other than the subgroup yj among the subgroups included in the comparison group. In addition, $\bigcap_{v \neq j}^{m} num(yv) \cap num(yj)$ of the denominator on the right side of Formula (7) is the number of data items corresponding to the overlapping portion in all combinations of subgroups yj and yv. Furthermore, $\bigcap_{v \neq j}^{m} no(yv) \cap no(yj)$ of the numerator is the number of positive examples among the data corresponding to the overlapping portion. When the number of data items num(yj) of the subgroup yj and the number of positive examples no(yj) are simply totaled, an overlapping count of the number of items occurs in the portion where instances overlap. Therefore, P(y) is calculated by using Formula (7) by excluding overlapping instances.

The bias evaluation device 310 may be realized by, for example, the computer 40 illustrated in Fig. 5. The storage device 43 of the computer 40 stores a bias evaluation program 350 for causing the computer 40 to function as the bias evaluation device 310. The bias evaluation program 350 has a classification process control command 54, an identifying process control command 56, an evaluation process control command 358, a generation process control command 60, and a training process control command 62.

The CPU 41 reads the bias evaluation program 350 from the storage device 43, loads the program in the memory 42, and sequentially executes the control commands included in the bias evaluation program 350. The CPU 41 executes the evaluation process control command 358 to operate as the evaluation unit 318 illustrated in Fig. 3. The same applies to the other control commands with respect to the bias evaluation program 50 according to the first embodiment. As a result, the computer 40 executing the bias evaluation program 350 functions as the bias evaluation device 310.

The functions implemented by the bias evaluation program 350 may be implemented by, for example, a semiconductor integrated circuit, more specifically, an ASIC, an FPGA, or the like.

Since the operation of the bias evaluation device 310 according to the third embodiment is different from that of the first embodiment only in the DI score calculated in step S26 of the bias evaluation processing (Figs. 6 and 7), the description thereof will be omitted.

As described above, when a plurality of subgroups are included in another group, the bias evaluation device according to the third embodiment calculates the DI score by excluding the data overlap of the overlapping portion of the subgroups. As a result, the positive example ratio of the comparison group can be more appropriately calculated, and the DI score for evaluating the bias of the data can be calculated.

Although the case in which training data with corrected fairness of input data is generated based on the evaluation result of a bias has been described in each of the above embodiments, the generation of the training data is not essential. The evaluation result of the bias may be output and used for analysis of the constructed machine learning model, the machine learning model under operation, and the like.

In addition, although the bias evaluation program is stored (installed) in the storage device in advance in each of the above embodiments, the present invention is not limited thereto. The program according to the disclosed technology may be provided in a form stored in a storage medium such as a CD-ROM, a DVD-ROM, or a USB memory.

Description of Reference Numerals

| | |
|---|---|
| 10, 210, 310 | Bias evaluation device |
| 12, 212, 312 | Control unit |
| 14 | Classifying unit |
| 16 | Identifying unit |
| 18, 218, 318 | Evaluation unit |
| 20 | Generation unit |
| 22 | Training unit |
| 40 | Computer |
| 41 | CPU |
| 42 | Memory |
| 43 | Storage device |
| 44 | Input/output device |
| 45 | R/W device |
| 46 | Communication I/F |
| 47 | Bus |

| 49 | Storage medium |
| 50, 250, 350 | Bias evaluation program |
| 54 | Classification process control command |
| 56 | Identifying process control command |
| 58, 258, 358 | Evaluation process control command |
| 60 | Generation process control command |
| 62 | Training process control command |

**Claims**

1. A bias evaluation program causing a computer to execute processing of:

   classifying a plurality of items of data into a plurality of groups based on a first attribute of a plurality of attributes included in each item of the plurality of items of data;
   identifying, from among the plurality of groups, a second group having a lower positive example ratio of data included than a positive example ratio of data included in a first group of the plurality of groups; and
   executing data bias evaluation based on comparison of the first group with another group, not including the second group, among the plurality of groups.

2. The bias evaluation program according to claim 1, wherein the data bias evaluation is executed based on a score indicated by a positive example ratio of the data included in the first group with respect to a positive example ratio of data included in the other group.

3. The bias evaluation program according to claim 2, wherein the data bias evaluation is executed based on the score, which is calculated by using, when a plurality of subgroups are included in the other group, an average of a positive example ratio of data included in each of the plurality of subgroups as a positive example ratio of the data included in the other group.

4. The bias evaluation program according to claim 2, wherein the data bias evaluation is executed based on the score, which is calculated by excluding, when a plurality of subgroups are included in the other group, data overlap from an overlapping portion between the subgroups.

5. The bias evaluation program according to any one of claims 1 to 4, wherein classifying the plurality of items of data into the plurality of groups includes classifying the plurality of items of data into the plurality of groups based on a combination of the first attribute and a second attribute of the plurality of attributes.

6. The bias evaluation program according to any one of claims 1 to 4, further causing the computer to execute processing of:
   generating training data for machine learning by performing processing on the plurality of items of data such that a difference between the positive example ratio of the data included in the first group and the positive example ratio of the data included in the other group falls within a predetermined range based on an execution result of the data bias evaluation.

7. A bias evaluation device, comprising a control unit configured to execute processing comprising:

   classifying a plurality of items of data into a plurality of groups based on a first attribute of a plurality of attributes included in each item of the plurality of items of data;
   identifying, from among the plurality of groups, a second group having a lower positive example ratio of data included than a positive example ratio of data included in a first group of the plurality of groups; and
   executing data bias evaluation based on comparison of the first group with another group, not including the second group, among the plurality of groups.

8. The bias evaluation device according to claim 7, wherein the data bias evaluation is executed based on a score indicated by a positive example ratio of the data included in the first group with respect to a positive example ratio of data included in the other group.

9. The bias evaluation device according to claim 8, wherein the data bias evaluation is executed based on the score, which is calculated by using, when a plurality of subgroups are included in the other group, an average of a positive example ratio of data included in each of the plurality of subgroups as a positive example ratio of the data included in the other group.

10. The bias evaluation device according to claim 8, wherein the data bias evaluation is executed based on the score, which is calculated by excluding, when a plurality of subgroups are included in the other group, data overlap from an overlapping portion between the subgroups.

11. The bias evaluation device according to any one of claims 7 to 10, wherein classifying the plurality of items of data into the plurality of groups includes classifying the plurality of items of data into the plurality of groups based on a combination of the first attribute and a second attribute of the plurality of attributes.

12. The bias evaluation device according to any one of claims 7 to 10, wherein the control unit executes processing of: generating training data for machine learning by performing processing on the plurality of items of data such that a difference between the positive example ratio of the data included in the first group and the positive example ratio of the data included in the other group falls within a predetermined range based on an execution result of the data bias evaluation.

13. A bias evaluation method, according to which a computer executes processing comprising:

classifying a plurality of items of data into a plurality of groups based on a first attribute of a plurality of attributes included in each item of the plurality of items of data;
identifying, from among the plurality of groups, a second group having a lower positive example ratio of data included than a positive example ratio of data included in a first group of the plurality of groups; and
executing data bias evaluation based on comparison of the first group with another group, not including the second group, among the plurality of groups.

14. The bias evaluation method according to claim 13, wherein the data bias evaluation is executed based on a score indicated by a positive example ratio of the data included in the first group with respect to a positive example ratio of data included in the other group.

15. The bias evaluation method according to claim 14, wherein the data bias evaluation is executed based on the score, which is calculated by using, when a plurality of subgroups are included in the other group, an average of a positive example ratio of data included in each of the plurality of subgroups as a positive example ratio of the data included in the other group.

16. The bias evaluation method according to claim 14, wherein the data bias evaluation is executed based on the score, which is calculated by excluding, when a plurality of subgroups are included in the other group, data overlap from an overlapping portion between the subgroups.

17. The bias evaluation method according to any one of claims 13 to 16, wherein classifying the plurality of items of data into the plurality of groups includes classifying the plurality of items of data into the plurality of groups based on a combination of the first attribute and a second attribute of the plurality of attributes.

18. The bias evaluation method according to any one of claims 13 to 16, causing the computer to execute processing comprising:
generating training data for machine learning by performing processing on the plurality of items of data such that a difference between the positive example ratio of the data included in the first group and the positive example ratio of the data included in the other group falls within a predetermined range based on an execution result of the data bias evaluation.

19. A non-transient storage medium that stores a bias evaluation program for causing a computer to execute processing comprising:

classifying a plurality of items of data into a plurality of groups based on a first attribute of a plurality of attributes included in each item of the plurality of items of data;
identifying, from among the plurality of groups, a second group having a lower positive example ratio of data included than a positive example ratio of data included in a first group of the plurality of groups; and
executing data bias evaluation based on comparison of the first group with another group, not including the second group, among the plurality of groups.

FIG.1

# FIG.2

ENGINEERING × MALE

GROUP OTHER THAN ENGINEERING × MALE

$P(x)=0.5$

$P(\bar{x})=0.5$

FAVORABLE TREATMENT

POOR TREATMENT

ENGINEERING × MALE

MEDICINE × MALE

ENGINEERING × FEMALE

LAW × FEMALE

MEDICINE × FEMALE

LAW × MALE

$P(x)=0.5$

$num(\bar{x}1)=20$
$P(\bar{x}1)=0.2$

$num(\bar{x}2)=10$
$P(\bar{x}2)=0.2$

$num(\bar{x}3)=10$
$P(\bar{x}3)=0.2$

$num(\bar{x}4)=10$
$P(\bar{x}4)=0.2$

$num(\bar{x}5)=50$
$P(\bar{x}5)=0.8$

EP 4 621 666 A1

# FIG.3

INPUT DATA

10(210,310)

12(212,312)

CONTROL UNIT

14

CLASSIFYING UNIT

16

IDENTIFYING UNIT

18(218,318)

EVALUATION UNIT

20

GENERATION UNIT

22

TRAINING UNIT

FIG.4

# FIG.5

# FIG.6

START

ACQUIRE INPUT DATA — S10

CLASSIFY INPUT DATA INTO GROUPS
BASED ON FIRST ATTRIBUTE — S12

②

DETERMINE GROUP x TO BE
EVALUATED AND CALCULATE
POSITIVE EXAMPLE RATIO P(x) — S14

IS THERE UNPROCESSED SUBGROUP $\bar{x}i$? — S16 — NO — ①

YES

SELECT ONE UNPROCESSED
SUBGROUP $\bar{x}i$ — S18

CALCULATE POSITIVE EXAMPLE
RATIO P($\bar{x}i$) — S20

NO — P(x) > P($\bar{x}i$) — S22

YES

EXCLUDE GROUP $\bar{x}i$ FROM $\bar{x}$ — S24

# FIG.7

```
           ( 1 )
             │
   ┌─────────────────────┐
   │  CALCULATE DI SCORE │ ～ S26
   └─────────────────────┘
             │
          ╱──┴──╲                    S28
       ╱   IS      ╲
     ╱ GROUP x CORRECTION ╲───── NO ──────┐
       ╲  TARGET?  ╱                        │
          ╲─────╱                           │
           │ YES                            │
   ┌─────────────────────┐                  │
   │ STORE INFORMATION OF│ ～ S30           │
   │  CORRECTION TARGET  │                  │
   └─────────────────────┘                  │
             │←───────────────────────────────┘
          ╱──┴──╲                    S32
       ╱  HAVE     ╲
     ╱ ALL GROUPS BEEN SET ╲──── NO ──────( 2 )
       ╲   TO x?  ╱
          ╲─────╱
           │ YES
   ┌─────────────────────┐
   │ GENERATE TRAINING DATA BY │ ～ S34
   │ PROCESSING DATA BASED ON  │
   │ INFORMATION OF CORRECTION │
   │        TARGET             │
   └─────────────────────┘
             │
   ┌─────────────────────┐
   │ TRAIN MACHINE LEARNING MODEL │ ～ S36
   │ USING GENERATED TRAINING DATA│
   └─────────────────────┘
             │
         (  END  )
```

# FIG.8

$DI_{new1}(x)=0.87$

```
   x          y1          y2
50/100       55/100       8/10
```

$P(x)=0.5$

$P(y)=0.57$

$P(y1)=0.55$        $P(y2)=0.8$

$$DI_{new2}(x) = \frac{P(x)}{\underset{j=1,2}{average(P(yi))}} = 0.740$$

FIG.9

## INTERNATIONAL SEARCH REPORT

| International application No. |
| --- |
| **PCT/JP2022/042614** |

**A. CLASSIFICATION OF SUBJECT MATTER**

*G06N 20/00*(2019.01)i; *G06F 16/906*(2019.01)i

FI:   G06N20/00 130; G06F16/906

According to International Patent Classification (IPC) or to both national classification and IPC

**B. FIELDS SEARCHED**

Minimum documentation searched (classification system followed by classification symbols)

G06N20/00; G06F16/00-16/958

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2021-170279 A (FUJITSU LTD) 28 October 2021 (2021-10-28) | 1-19 |
| A | JP 2019-008640 A (TOSHIBA CORP) 17 January 2019 (2019-01-17) | 1-19 |
| A | JP 2009-301557 A (NEC CORP) 24 December 2009 (2009-12-24) | 1-19 |

☐ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 January 2023** | **31 January 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/042614**

| Patent document cited in search report | | | Publication date (day/month/year) | Patent family member(s) | Publication date (day/month/year) |
|---|---|---|---|---|---|
| JP | 2021-170279 | A | 28 October 2021 | (Family: none) | |
| JP | 2019-008640 | A | 17 January 2019 | (Family: none) | |
| JP | 2009-301557 | A | 24 December 2009 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022510142 A

- JP 2021152838 A